# EUROPEAN PATENT SPECIFICATION

(11) **EP 3 195 324 B1**
(45) Date of publication and mention of the grant of the patent: **19.02.2020**
(21) Application number: 15807719.8
(22) Date of filing: 16.09.2015
(51) Int. Cl.: G21C 3/32, G21C 3/328, G21C 3/08

(54) **NUCLEAR FUEL ASSEMBLY**
KERNBRENNSTOFFELEMENT
ENSEMBLE À COMBUSTIBLE NUCLÉAIRE

(30) Priority: 16.09.2014 US 201462050985 P
(43) Date of publication of application: 26.07.2017
(73) Proprietor: Lightbridge Corporation, Mclean, Virginia 22102 (US)
(72) Inventor: TOTEMEIER, Aaron, Denver, Colorado 80211 (US); BASHKIRTSEV, Sergey M., Moscow 125080 (RU); MOROZOV, Alexey G., Moscow 123423 (RU)
(74) Representative: Beck Greener LLP
(86) International application number: PCT/US2015/050454
(87) International publication number: WO 2016/044439

(56) References cited:
- US-A- 3 361 640
- US-A1- 2009 252 278
- US-A1- 2013 322 591
- US-B1- 6 434 209

## Description

The present invention relates generally to nuclear reactors.

The present invention also relates generally to nuclear reactors and nuclear fuel assemblies used in the core of nuclear reactors.

More specifically, the present invention relates to Canadian Deuterium-Uranium (CANDU) heavy-water reactors, and fuel assemblies for use in the same.

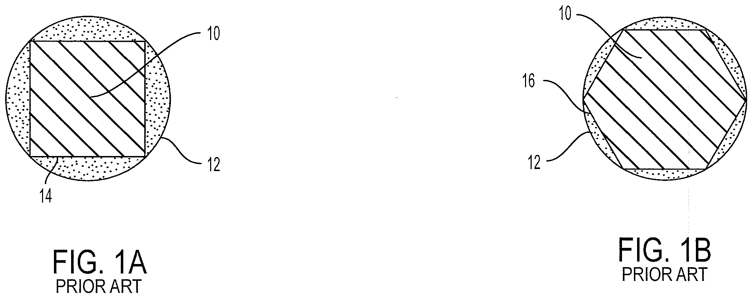

FIGS. 1A and 1B depict simplified cross-sectional views of examples of conventional fuel assemblies 10.

FIG. 1A depicts a fuel assembly 10 of the PWR type, and FIG. 1B depicts a fuel assembly 10 of the water-cooled water-moderated power rector (VVER) type. In FIG. 1A, the fuel rod assembly 10 comprises fuel rods assembled into a square grid. The PWR fuel assembly 10 of FIG. 1A has fuel rod bundle self-spacing that can be described as having a square cross-sectional shape. In FIG. 1B, the fuel assembly 10 comprises fuel rods arranged into a triangular grid. The VVER fuel assembly 10 of FIG. 1B has fuel rod bundle self-spacing that can be described as having a regular hexagonal cross-section shape.

When these assemblies are fitted into a tube 12, empty segments not used by the fuel rod assembly are formed, as shown by the shaded area 14 located between the tube 12 and the square 14 in FIG. 1A, and between the tube 12 and the hexagon 16 in FIG. 1B. According to embodiments, an assembly in a square grid occupies approximately 63.7% of the area of the circumscribed circle (e.g., tube 12), while an assembly in a triangular grid occupies approximately 82.7% of the area of the circumscribed circle (e.g., tube 12).

It is known to use the empty space to address concerns of fuel rod and assembly swelling during burnup. It is also known to fill these areas with a burnable absorber, etc. US-A-2013/322591, US-A-2009252278, and US3361640 each describes a fuel assembly for use in a core of a nuclear power reactor can include a frame shaped and configured fit within the nuclear reactor internal core structure; and a plurality of helically twisted fuel elements supported by the frame in a fuel rod bundle, with each of the fuel elements comprises fissile material; wherein as viewed in a cross-section that is perpendicular to an axial direction of the fuel assembly, the outermost fuel elements of the fuel rod bundle can define a substantially circular perimeter.

According to an aspect of the present invention, there is provided a fuel assembly as described in US-A-2013/322591, US-A-2009252278, or US3361640, characterized in that the plurality of fuel elements are arranged into a mixed grid pattern that includes a first, rectangular grid pattern and a second, triangular grid pattern; and in that some of the plurality fuel elements are separated from adjacent fuel elements by a common centerline-to-centerline distance, and a circumscribed diameter of some of the plurality of fuel elements equals the centerline-to-centerline distance. According to embodiments, the frame can be shaped and configured to fit within a pressure tube of a CANDU reactor.

According to embodiments, each of the plurality of fuel elements can have substantially the same circumscribed diameter. The plurality of fuel elements can be arranged in concentric circles.

According to embodiments, the first, rectangular grid pattern and the second, triangular grid pattern can at least partially alternate with one another. The fuel elements of the first, rectangular grid pattern can be separated from adjacent fuel elements of the first, rectangular grid pattern by a common centerline-to-centerline distance, and a circumscribed diameter of the fuel elements of the first, rectangular grid pattern can equal the centerline-to-centerline distance. Additionally, the fuel elements of the second, triangular grid pattern can be separated from adjacent fuel elements of the second, triangular grid pattern by a common centerline-to-centerline distance, and a circumscribed diameter of the fuel elements in the second, triangular grid pattern can equal the centerline-to-centerline distance

According to embodiments, each of the fuel elements can have a multi-lobed profile that includes ribs, for example, spiral ribs. The ribs of adjacent fuel elements can periodically contact one another over the axial length of the fuel elements to at least partially maintain the spacing of the fuel elements relative to each other.

According to embodiments, the plurality of fuel elements can consist of 61 fuel elements.

According to embodiments, the frame can include a structure circumscribing the fuel rod bundle, such that all of the fuel elements are located inside the structure. The structure can comprise a shroud. When viewed in a cross-section that is perpendicular to an axial direction of the fuel assembly, the shroud can define a cross-section substantially defining a circle or dodecagon. When viewed in a cross-section that is perpendicular to an axial direction of the fuel assembly, the fuel assembly can occupy greater than about 64%, more specifically greater than about 83% of the internal cross-sectional area of a tube circumscribing the fuel assembly. According to an embodiment, the fuel assembly can occupy between about 83% and about 95% of the internal cross-sectional area of the tube circumscribing the fuel assembly. According to an embodiment, the plurality of fuel elements comprises extruded fuel elements.

According to another aspect of the present invention, there is provided a use the fuel assembly of the first aspect in a conventional land-based nuclear power reactor of a conventional nuclear power plant having a reactor design that was in actual use before 2014; wherein the fuel assembly is thermodynamically designed and physically shaped for operation in the conventional land-based nuclear power reactor, and the frame is shaped and configured to fit into the land-based nuclear power reactor in place of a conventional fuel assembly for said reactor. For example, the conventional land-based nuclear power reactor can be a CANDU reactor.

According to embodiments, the fuel assembly of the present invention may be used in a nuclear reactor comprising a core and one or more fuel assemblies, the fuel assembly of the present invention, disposed within the core. According to embodiments, the nuclear reactor is a CANDU reactor comprising pressure tubes, and the frame is shaped and configured to fit within the pressure tubes.

According to examples, each of the plurality of fuel elements can have substantially the same circumscribed diameter. The plurality of fuel elements can be arranged in concentric circles, and/or the plurality of fuel elements can be arranged into a mixed grid pattern that includes a first, rectangular grid pattern and a second, triangular grid pattern. The first, rectangular grid pattern and the second, triangular grid pattern can at least partially alternate with one another

According to examples, each of the fuel elements has a multi-lobed profile that includes spiral ribs.

The ribs of adjacent fuel elements can periodically contact one another over the axial length of the fuel elements to at least partially maintain the spacing of the fuel elements relative to each other.

According to examples, the frame of the fuel element comprises a structure circumscribing the fuel rod bundle, such that all of the fuel elements are located inside the structure. The structure can comprise a shroud that when viewed in a cross-section that is perpendicular to an axial direction of the fuel assembly, defines a cross-section substantially defining a circle or dodecagon.

These and other aspects of various embodiments of the present invention, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment of the invention, the structural components illustrated herein are drawn to scale. It is to be expressly understood, however, that the drawings are for the purpose of illustration and description only and are not intended as a definition of the limits of the invention. In addition, it should be appreciated that structural features shown or described in any one embodiment herein can be used in other embodiments as well. As used in the specification and in the claims, the singular form of "a," "an," and "the" include plural referents unless the context clearly dictates otherwise.

For a better understanding of embodiments of the present invention, as well as other features thereof, reference is made to the following description which is to be used in conjunction with the following drawings, wherein:
FIG. 1A is a simplified cross-sectional view of a conventional fuel assembly having fuel rods assembled in a square grid;
FIG. 1B is a simplified cross-sectional view of a conventional fuel assembly having fuel rods assembled in a triangular grid;
FIG. 2 is a simplified cross-sectional view of a layout of a self-spaced fuel assembly made up of 61 fuel rods in a square-triangular grid, according to an embodiment;
FIG. 3 is a simplified cross-sectional view of a layout of a self-spaced fuel assembly made up of 19 fuel rods in a square-triangular grid, according to an embodiment;
FIG. 4 depicts a cross-sectional view of an embodiment of a fuel assembly at an initial reference position along the fuel assembly, referred to herein as the initial 0° position;
FIG. 5 depicts a cross-sectional view of the fuel assembly of FIG. 4 at a 30° fuel rod rotation, or at a lengthwise displacement of 1/12 of the fuel rod swirl pitch, with respect to the initial 0° position of FIG. 4; and
FIG. 6 depicts a cross-sectional view of the fuel assembly of FIG. 4 at a 60° fuel rod rotation, or at a lengthwise displacement of 1/6 of the fuel rod swirl pitch, with respect to the initial 0° position of FIG. 4.

Embodiments described herein can increase the fuel burnup power and/or level (operating time until unloading) of a CANDU fuel assembly and/or reactor as a whole, while maintaining or increasing the level of safety. According to embodiments, this can be achieved through the use of fuel assemblies made from twisted, self-spaced, monolithic fuel rods, for example, the extruded uranium-zirconium (U-Zr) fuel rods disclosed in US-A-2014/0334595 and US-A-2013/0322591.

CANDU fuel assemblies typically utilize very short (e.g., on the order of 50 cm) fuel rods. Embodiments of the present invention provide partially or fully self-spaced assemblies of CANDU fuel rods. For example, some fuel assemblies disclosed herein provide for self-spacing of all the fuel rods among themselves (e.g., rib by rib). However, alternative embodiments can include non-self-spaced arrangements. Embodiments can include a frame having a shroud, or other channel or device surrounding all or a part of the fuel rod bundle (referred to generally herein as a "shroud"), and better utilize the space available inside the shroud than is possible with the prior art. For example, as will be described in more detail below, embodiments use a "square-triangular" fuel rod grid in an array.

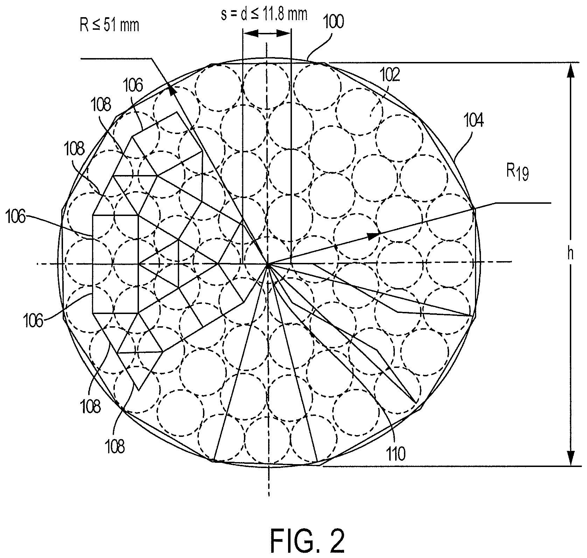

FIG. 2 is a simplified cross-sectional view of an embodiment of a self-spaced fuel assembly 100. The fuel assembly can include 61 fuel rods 102 in a square-triangular grid, however, other configurations may be possible. The fuel assembly shown in FIG. 2 can have the same or similar envelope as an Advanced CANDU Reactor (ACR) CANDU Flexible (CANFLEX) 43-element assembly. Whereas a typical CANFLEX assembly has 43 fuel elements each with an outer diameter of about 13.5 mm, the fuel assembly 100 shown in FIG. 2 can have 61 fuel elements 102 each with an outer diameter of about 11.5 mm, however, other quantities and sizes of fuel elements are contemplated.

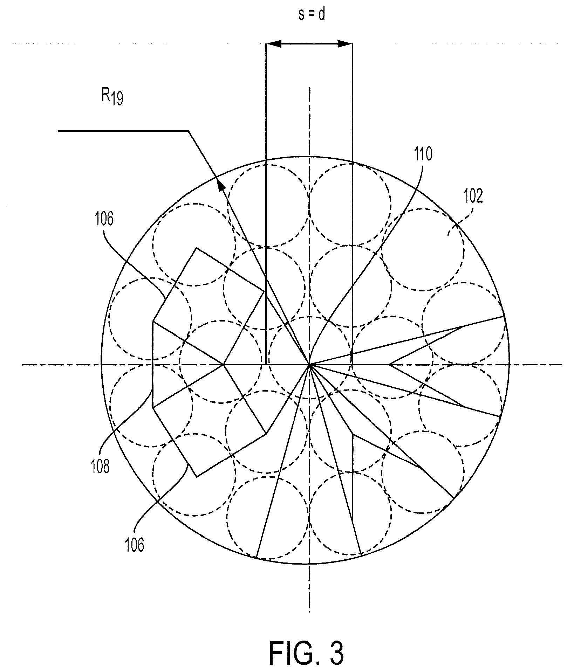

The fuel assembly of FIG. 2 can be fitted into a shroud 104. For example, the shroud 104 can have a cross-section in the shape of a dodecagon, however, other shapes are envisioned. According to embodiments, the radius R of a circle circumscribing the fuel elements 102 can be less than or equal to 51 mm. According to embodiments, the inner radius of the shroud 104 can be about 51.7 mm, however, other embodiments are possible. Shroud 104 can have a dodecagon shape, and can define a width h across the flats of about 100 mm (≤ 99.99 mm). According to embodiments, the square-triangular grid of 61 fuel elements defines an outer perimeter that occupies approximately 95.5% of the area of the circumscribed circle (e.g., the shroud 104 or pressure tube). With reference to FIG. 3, the central area of 19 fuel rods 102 can fit nearly perfectly into a tube. According to embodiments, the radius R19 of a circle circumscribing the central 19 fuel rods can have a diameter of 3.922 mm, however, other dimensions are possible.

Referring to FIGS. 2 and 3, the fuel elements can be located in first and second grid patterns intermixed with one another to form what is referred to herein as a "square-triangular grid." The first grid pattern includes squarely arranged rows and columns of fuel elements having a centerline-to-centerline distance between the rows and columns that equals the common circumscribed diameter "d" of the fuel elements (see reference 106 in FIG. 3 for an example of the first "square" grid). The second grid pattern includes equilateral triangles in which a length of each side of each triangle (i.e., the centerline-to-centerline distance between adjacent fuel elements defining the corners of each triangle) is the common circumscribed diameter "d" of the fuel elements (see reference 108 in FIG. 3 for an example of a second "triangular" grid). Thus, the second/triangular grid pattern 108 is different from the first/square grid pattern 106. According to other examples, additional and/or alternative grid patterns could also be used (e.g., rectangular grid patterns, isometric grid patterns, parallelogram patterns, other regular repeating patterns). According to embodiments, a given fuel element 102 may be located in a square grid pattern with one set of surrounding fuel elements, and simultaneously be located in a triangular grid pattern with another set of surrounding fuel elements, however, other configurations are possible.

Still referring to FIGS. 2 and 3, the square 106 and triangular 108 grid patterns can alternate with one another when viewed from one or more perspectives. For example, the square 106 and triangular 108 grid patterns can alternate with one another (but not necessarily on a one-to-one basis) with movement along any given radius from the center 110 of the fuel assembly to the outer perimeter, e.g., shroud 104. Additionally or alternatively, the fuel elements 102 can be arranged in concentric circles, and the square and triangular grid patterns can alternate with one another (but not necessarily on a one-to-one basis) with movement around any one of the concentric circles.

As mentioned before, the fuel elements may be self-spacing. According to embodiments, the self-spacing can be a factor of the fuel rod circumscribed diameter, independent of the fuel rod shape selected, however, other configurations are possible. According to certain embodiments, the fuel rods 102 may be any shape with twisted ribs (e.g., a tube with ribs, squares, etc.). However, other shapes may be possible, such as circular cross-sections, regular geometric cross-sections, etc.

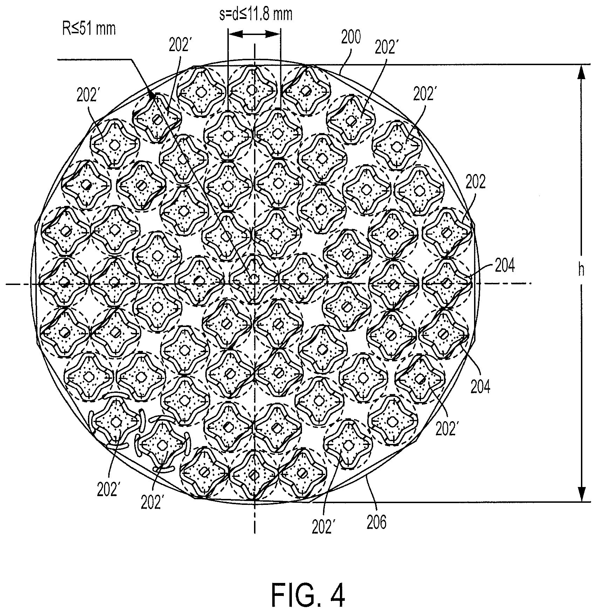

FIGS. 4-6 depict cross-sectional views of an embodiment of a fuel assembly 200 comprising four-lobe fuel rods 202, such as those described in US-A-2014/0334595 and US-A-2013/0322591. According to a further aspect, certain fuel rod shapes such as the four-lobe design, may be standardized for different reactors. For example, a fuel rod with a four-lobe shape, a circumscribed diameter of 12 ± 1 mm, and slight modifications may become standard for different reactors such as the PWR and CANDU.

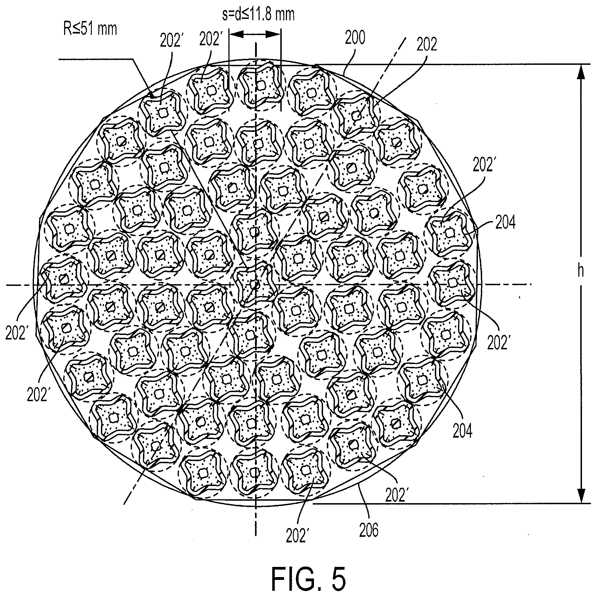

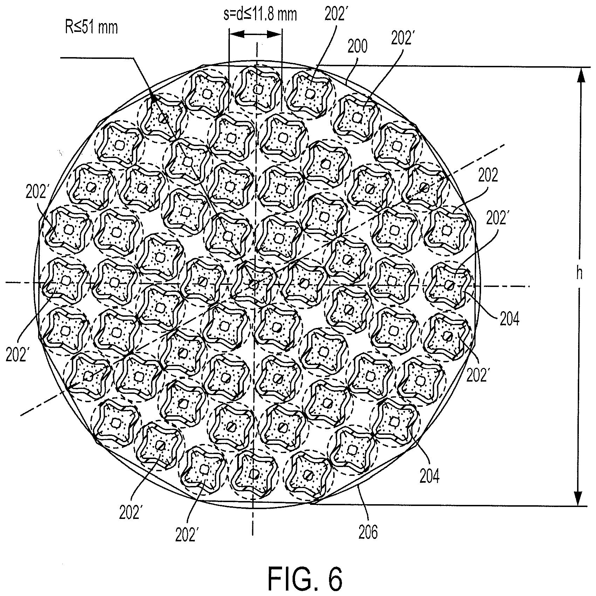

FIG. 4 depicts the fuel assembly 200 at an initial reference position, referred to herein as the initial 0° position. The initial 0° position can occur at any point along the fuel rods 202, and can occur at regular intervals. FIG. 5 depicts the fuel assembly 200 of FIG. 4 at the point of 30° rotation of the fuel rod's lobes 204 (e.g., lengthwise displacement of 1/12 of the fuel rod swirl pitch) with respect to FIG. 4. FIG. 6 depicts the fuel assembly of FIG. 4 at the point of 60° rotation of the fuel rods' lobes 204 (e.g., lengthwise displacement of 1/6 of the fuel rod swirl pitch) with respect to FIG. 4. A 90° rotation of the lobes 204, or a lengthwise displacement of 1/4 of the fuel rod swirl pitch, away from the position of FIG. 4 replicates the tentative initial position of 0° shown in FIG. 4. In FIGS. 4-6, the eight fuel rods 202' indicate the only rods within the cross-section that do not have contact with other fuel rods 202 or the shroud 206. At axial locations between those shown in FIGS. 4, 5, and 6, there is no lengthwise contact of the fuel rods with one another or with the shroud 206. Accordingly, the fuel assembly is self-spacing and all the fuel rods are self-spaced along the length of the assembly.

As mentioned previously, the fuel rods can comprise the four-lobe fuel rods described in applicant's co-pending United States Application Nos. 14/081,056 and 13/695,792. However, according to alternative embodiments, any of the four-lobe fuel rods in the aforedescribed fuel assemblies can replaced by standard pelleted cylindrical fuel rods (uranium or thorium), or burnable poison bearing fuel rods (e.g., containing gadolinium (Gd), erbium (Er), and/or dysprosium (Dy))

As used throughout this application, the term "shroud" encompasses a variety of different designs that can surround the fuel rod bundle, either partially or completely. For example, according to embodiments, a "shroud' can be a solid dodecagonal shroud, perforated or with slits. Alternatively, the "shroud" can comprise individual bands or a shrouding strip, or riveting on cylindrical shell (e.g., solid or "openwork" with slits). Moreover, the term "shroud" can encompass other similar structures and designs apparent to one of ordinary skill in the art based on this description.

The foregoing illustrated embodiments are provided to illustrate the structural and functional principals of the present invention. The principles of the present invention are intended to encompass any and all changes, alterations, and/or substitutions within the scope of the following claims.

## Claims

1. A fuel assembly (100, 200) for use in a core of a nuclear power reactor, the assembly comprising:
a frame shaped and configured to fit within the nuclear reactor internal core structure; and
a plurality of helically twisted fuel elements (102, 202) supported by the frame in a fuel rod bundle, each of the fuel elements (102, 202) comprising fissile material;
wherein as viewed in a cross-section that is perpendicular to an axial direction of the fuel assembly (100, 200), the outermost fuel elements (102, 202) of the fuel rod bundle define a substantially circular perimeter;
wherein the plurality of fuel elements (102, 202) are arranged into a mixed grid pattern that includes a first, rectangular grid pattern (106) and a second, triangular grid pattern (108);
**characterized in that**
some of the plurality of fuel elements (102, 202) are separated from adjacent fuel elements (102, 202) by a common centerline-to-centerline distance, and a circumscribed diameter of some of the plurality of fuel elements (102, 202) equals the centerline-to-centerline distance.

2. The fuel assembly of claim 1, wherein the frame is shaped and configured to fit within a pressure tube of a CANDU reactor.

3. The fuel assembly of claim 1, wherein each of the plurality of fuel elements (102, 202) has substantially the same circumscribed diameter.

4. The fuel assembly of claim 1, wherein the plurality of fuel elements (102, 202) are arranged in concentric circles.

5. The fuel assembly of claim 1, wherein the first, rectangular grid pattern (106) and the second, triangular grid pattern (108) at least partially alternate with one another.

6. The fuel assembly of claim 1, wherein:
the fuel elements (102, 202) of the first, rectangular grid pattern are separated from adjacent fuel elements (102, 202) of the first, rectangular grid pattern by a common centerline-to-centerline distance, and a circumscribed diameter of the fuel elements (102, 202) in the first, rectangular grid pattern equals the centerline-to-centerline distance; and
the fuel elements (102, 202) of the second, triangular grid pattern are separated from adjacent fuel elements (102, 202) of the second, triangular grid pattern by a common centerline-to-centerline distance, and a circumscribed diameter of the fuel elements (102, 202) in the second, triangular grid pattern equals the centerline-to-centerline distance.

7. The fuel assembly of claim 1, wherein each of the fuel elements (202, 202') has a multi-lobed profile (204) that includes ribs.

8. The fuel assembly of claim 7, wherein the ribs comprise spiral ribs.

9. The fuel assembly of claim 8, wherein the ribs of adjacent fuel elements (202) periodically contact one another over the axial length of the fuel elements (202) to at least partially maintain the spacing of the fuel elements (202) relative to each other.

10. The fuel assembly of claim 1, wherein the plurality of fuel elements (102, 202) consists of 61 fuel elements.

11. The fuel assembly of claim 1, wherein the frame comprises a structure circumscribing the fuel rod bundle, such that all of the fuel elements are located inside the structure.

12. The fuel assembly of claim 11, wherein the structure comprises a shroud.

13. The fuel assembly of claim 12, wherein as viewed in a cross-section that is perpendicular to an axial direction of the fuel assembly (100, 200), the shroud (104, 206) defines a cross-section substantially defining a circle or dodecagon.

14. The fuel assembly of claim 1, wherein as viewed in a cross-section that is perpendicular to an axial direction of the fuel assembly (100, 200), the fuel assembly (100, 200) occupies greater than about 64% of the internal cross-sectional area of a tube circumscribing the fuel assembly (100, 200).

15. The fuel assembly of claim 14, wherein the fuel assembly (100, 200) occupies greater than about 83% of the internal cross-sectional area of the tube circumscribing the fuel assembly (100, 200).

16. The fuel assembly of claim 14, wherein the fuel assembly (100, 200) occupies between about 83% and about 95% of the internal cross-sectional area of the tube circumscribing the fuel assembly (100, 200).

17. The fuel assembly of claim 1, wherein the plurality of fuel elements (102, 202) comprises extruded fuel elements.

18. Use of the fuel assembly of claim 1 in a conventional land-based nuclear power reactor of a conventional nuclear power plant having a reactor design that was in actual use before 2014, wherein:
the fuel assembly (100, 200) is thermodynamically designed and physically shaped for operation in the conventional land-based nuclear power reactor; and
the frame is shaped and configured to fit into the land-based nuclear power reactor in place of a conventional fuel assembly for said reactor.

19. The use of the fuel assembly of claim 18, wherein the conventional land-based nuclear power reactor is a CANDU reactor.

20. A nuclear reactor, comprising:
a core; and
one or more fuel assemblies (100, 200) disposed within the core, wherein the one or more fuel assemblies (100, 200) includes a fuel assembly (100, 200) according to any of claims 1 to 17.

21. The nuclear reactor of claim 20, wherein the nuclear reactor is a CANDU reactor comprising pressure tubes, and the frame is shaped and configured to fit within the pressure tubes.

## Patentansprüche

1. Brennstoffanordnung (100, 200) zur Verwendung in einem Kern eines Atomkraftreaktors, wobei die Anordnung umfasst:
einen Rahmen, der dafür geformt und konfiguriert ist, in die innere Kernstruktur des Atomreaktors zu passen; und
eine Mehrzahl von spiralförmig verdrehten Brennelementen (102, 202), die durch den Rahmen in einem Brennstabbündel gelagert sind, wobei jedes der Brennelemente (102, 202) spaltbares Material umfasst;
wobei, gesehen in einem zu einer Axialrichtung der Brennstoffanordnung (100, 200) senkrechten Querschnitt, die äußersten Brennelemente (102, 202) des Brennstabbündels einen im Wesentlichen kreisförmigen Umfang definieren;
wobei die Mehrzahl von Brennelementen (102, 202) in einem gemischten Gittermuster angeordnet ist, das ein erstes, rechteckiges Gittermuster (106) und ein zweites, dreieckiges Gittermuster (108) aufweist;
**dadurch gekennzeichnet, dass**
einige der Mehrzahl von Brennelementen (102, 202) von benachbarten Brennelementen (102, 202) durch einen gemeinsamen Abstand von Mittellinie zu Mittellinie getrennt sind und ein umschriebener Durchmesser einiger der Mehrzahl von Brennelementen (102, 202) gleich dem Abstand von Mittellinie zu Mittellinie ist.

2. Brennstoffanordnung nach Anspruch 1, wobei der Rahmen dafür geformt und konfiguriert ist, in eine Druckröhre eines CANDU-Reaktors zu passen.

3. Brennstoffanordnung nach Anspruch 1, wobei jedes der Mehrzahl von Brennelementen (102, 202) im Wesentlichen den gleichen umschriebenen Durchmesser hat.

4. Brennstoffanordnung nach Anspruch 1, wobei die Mehrzahl von Brennelementen (102, 202) in konzentrischen Kreisen angeordnet ist.

5. Brennstoffanordnung nach Anspruch 1, wobei das erste, rechteckige Gittermuster (106) und das zweite, dreieckige Gittermuster (108) einander zumindest teilweise abwechseln.

6. Brennstoffanordnung nach Anspruch 1, wobei:
die Brennelemente (102, 202) des ersten, rechteckigen Gittermusters von benachbarten Brennelementen (102, 202) des ersten, rechteckigen Gittermusters durch einen gemeinsamen Abstand von Mittellinie zu Mittellinie getrennt sind und ein umschriebener Durchmesser der Brennelemente (102, 202) in dem ersten, rechteckigen Gittermuster gleich dem Abstand von Mittellinie zu Mittellinie ist; und
die Brennelemente (102, 202) des zweiten, dreieckigen Gittermusters von benachbarten Brennelementen (102, 202) des zweiten, dreieckigen Gittermusters durch einen gemeinsamen Abstand von Mittellinie zu Mittellinie getrennt sind und ein umschriebener Durchmesser der Brennelemente (102, 202) in dem zweiten, dreieckigen Gittermuster gleich dem Abstand von Mittellinie zu Mittellinie ist.

7. Brennstoffanordnung nach Anspruch 1, wobei jedes der Brennelemente (202, 202') ein mehrflügeliges Profil (204) hat, das Rippen aufweist.

8. Brennstoffanordnung nach Anspruch 7, wobei die Rippen spiralförmige Rippen umfassen.

9. Brennstoffanordnung nach Anspruch 8, wobei die Rippen benachbarter Brennelemente (202) periodisch über die axiale Länge der Brennelemente (202) miteinander in Kontakt treten, um die Beabstandung der Brennelemente (202) in Bezug aufeinander zumindest teilweise beizubehalten.

10. Brennstoffanordnung nach Anspruch 1, wobei die Mehrzahl von Brennelementen (102, 202) aus 61 Brennelementen besteht.

11. Brennstoffanordnung nach Anspruch 1, wobei der Rahmen eine Struktur umfasst, die das Brennstabbündel umschreibt, sodass alle der Brennelemente innerhalb der Struktur angeordnet sind.

12. Brennstoffanordnung nach Anspruch 11, wobei die Struktur eine Hülle umfasst.

13. Brennstoffanordnung nach Anspruch 12, wobei, gesehen in einem zu einer Axialrichtung der Brennstoffanordnung (100, 200) senkrechten Querschnitt, die Hülle (104, 206) einen Querschnitt definiert, der im Wesentlichen einen Kreis oder ein Zwölfeck definiert.

14. Brennstoffanordnung nach Anspruch 1, wobei, gesehen in einem zu einer Axialrichtung der Brennstoffanordnung (100, 200) senkrechten Querschnitt, die Brennstoffanordnung (100, 200) mehr als ungefähr 64 % der Innenquerschnittsfläche einer Röhre einnimmt, die die Brennstoffanordnung (100, 200) umschreibt.

15. Brennstoffanordnung nach Anspruch 14, wobei die Brennstoffanordnung (100, 200) mehr als ungefähr 83 % der Innenquerschnittsfläche der Röhre einnimmt, die die Brennstoffanordnung (100, 200) umschreibt.

16. Brennstoffanordnung nach Anspruch 14, wobei die Brennstoffanordnung (100, 200) zwischen ungefähr 83 % und ungefähr 95 % der Innenquerschnittsfläche der Röhre einnimmt, die die Brennstoffanordnung (100, 200) umschreibt.

17. Brennstoffanordnung nach Anspruch 1, wobei die Mehrzahl von Brennelementen (102, 202) extrudierte Brennelemente umfasst.

18. Verwendung der Brennstoffanordnung nach Anspruch 1 in einem konventionellen landbasierten Atomkraftreaktor einer konventionellen Atomkraftanlage mit einer Reaktorbauweise, die vor 2014 in tatsächlicher Verwendung war, wobei:
die Brennstoffanordnung (100, 200) thermodynamisch konstruiert und physisch für einen Betrieb in dem konventionellen landbasierten Atomkraftreaktor geformt ist; und
der Rahmen dafür geformt und konfiguriert ist, anstelle einer konventionellen Brennstoffanordnung für den Reaktor in den landbasierten Atomkraftreaktor zu passen.

19. Verwendung der Brennstoffanordnung nach Anspruch 18, wobei der konventionelle landbasierte Atomkraftreaktor ein CANDU-Reaktor ist.

20. Atomreaktor, umfassend:
einen Kern; und
eine oder mehrere Brennstoffanordnungen (100, 200), die in dem Kern angeordnet sind, wobei die eine oder mehreren Brennstoffanordnungen (100, 200) eine Brennstoffanordnung (100, 200) nach einem der Ansprüche 1 bis 17 aufweisen.

21. Atomreaktor nach Anspruch 20, wobei der Atomreaktor ein CANDU-Reaktor ist, der Druckröhren umfasst, und der Rahmen dafür geformt und konfiguriert ist, in die Druckröhren zu passen.

## Revendications

1. Assemblage combustible (100, 200) destiné à être utilisé dans un cœur d'un réacteur de centrale nucléaire, l'assemblage comprenant :
un cadre formé et configuré pour s'ajuster dans la structure de cœur interne de réacteur nucléaire ; et
une pluralité d'éléments combustibles à vrille hélicoïdale (102, 202) supportés par le cadre dans un faisceau de crayons combustibles, chacun des éléments combustibles (102, 202) comprenant du matériau fissile ;
dans lequel, tels que vus dans une section qui est perpendiculaire à une direction axiale de l'assemblage combustible (100, 200), les éléments combustibles les plus à l'extérieur (102, 202) du faisceau de crayons combustibles définissent un périmètre sensiblement circulaire ;
la pluralité d'éléments combustibles (102, 202) étant disposés en un motif de grille mixte qui comprend un premier motif de grille rectangulaire (106) et un second motif de grille triangulaire (108) ;
**caractérisé par le fait que**
certains parmi la pluralité d'éléments combustibles (102, 202) sont séparés d'éléments combustibles adjacents (102, 202) d'une distance centre-à-centre commune, et un diamètre circonscrit de certains parmi la pluralité d'éléments combustibles (102, 202) est égal à la distance centre-à-centre.

2. Assemblage combustible selon la revendication 1, dans lequel le cadre est formé et configuré pour s'ajuster dans un tube de force d'un réacteur CANDU.

3. Assemblage combustible selon la revendication 1, dans lequel chacun parmi la pluralité d'éléments combustibles (102, 202) a sensiblement le même diamètre circonscrit.

4. Assemblage combustible selon la revendication 1, dans lequel la pluralité d'éléments combustibles (102, 202) sont disposés en cercles concentriques.

5. Assemblage combustible selon la revendication 1, dans lequel le premier motif de grille rectangulaire (106) et le second motif de grille triangulaire (108) sont au moins partiellement alternés l'un avec l'autre.

6. Assemblage combustible selon la revendication 1, dans lequel :
les éléments combustibles (102, 202) du premier motif de grille rectangulaire sont séparés d'éléments combustibles adjacents (102, 202) du premier motif de grille rectangulaire d'une distance centre-à-centre commune, et un diamètre circonscrit des éléments combustibles (102, 202) dans le premier motif de grille rectangulaire est égal à la distance centre-à-centre ; et
les éléments combustibles (102, 202) du second motif de grille triangulaire sont séparés d'éléments combustibles adjacents (102, 202) du second motif de grille triangulaire d'une distance centre-à-centre commune, et un diamètre circonscrit des éléments combustibles (102, 202) dans le second motif de grille triangulaire est égal à la distance centre-à-centre.

7. Assemblage combustible selon la revendication 1, dans lequel chacun des éléments combustibles (202, 202') a un profil à lobes multiples (204) qui comprend des nervures.

8. Assemblage combustible selon la revendication 7, dans lequel les nervures comprennent des nervures en spirale.

9. Assemblage combustible selon la revendication 8, dans lequel les nervures d'éléments combustibles adjacents (202) entrent périodiquement en contact les unes avec les autres sur la longueur axiale des éléments combustibles (202) pour maintenir au moins partiellement l'espacement des éléments combustibles (202) les uns par rapport aux autres.

10. Assemblage combustible selon la revendication 1, dans lequel la pluralité d'éléments combustibles (102, 202) consistent en 61 éléments combustibles.

11. Assemblage combustible selon la revendication 1, dans lequel le cadre comprend une structure entourant le faisceau de crayons combustibles, de telle sorte que tous les éléments combustibles sont situés à l'intérieur de la structure.

12. Assemblage combustible selon la revendication 11, dans lequel la structure comprend une enveloppe.

13. Assemblage combustible selon la revendication 12, dans lequel, telle que vue dans une section qui est perpendiculaire à une direction axiale de l'assemblage combustible (100, 200), l'enveloppe (104, 206) définit une section transversale définissant sensiblement un cercle ou un dodécagone.

14. Assemblage combustible selon la revendication 1, dans lequel, tel que vu dans une section qui est perpendiculaire à une direction axiale de l'assemblage combustible (100, 200), l'assemblage combustible (100, 200) occupe plus qu'environ 64 % de l'aire transversale interne d'un tube entourant l'assemblage combustible (100, 200).

15. Assemblage combustible selon la revendication 14, l'assemblage combustible (100, 200) occupant plus qu'environ 83 % de l'aire transversale interne du tube entourant l'assemblage combustible (100, 200) .

16. Assemblage combustible selon la revendication 14, l'assemblage combustible (100, 200) occupant entre environ 83 % et environ 95 % de l'aire transversale interne du tube entourant l'assemblage combustible (100, 200).

17. Assemblage combustible selon la revendication 1, dans lequel la pluralité d'éléments combustibles (102, 202) comprennent des éléments combustibles extrudés.

18. Utilisation de l'assemblage combustible selon la revendication 1 dans un réacteur de centrale nucléaire terrestre classique d'une centrale nucléaire classique ayant une conception de réacteur qui était en utilisation réelle avant 2014, dans laquelle :
l'assemblage combustible (100, 200) est conçu thermodynamiquement et formé physiquement pour un fonctionnement dans le réacteur de centrale nucléaire terrestre classique ; et
le cadre est formé et configuré pour s'ajuster dans le réacteur de centrale nucléaire terrestre à la place d'un assemblage combustible classique pour ledit réacteur.

19. Utilisation de l'assemblage combustible selon la revendication 18, dans lequel le réacteur de centrale nucléaire terrestre classique est un réacteur CANDU.

20. Réacteur nucléaire, comprenant :
un cœur ; et
un ou plusieurs assemblages combustibles (100, 200) disposés à l'intérieur du cœur, le ou les assemblages combustibles (100, 200) comprenant un assemblage combustible (100, 200) selon l'une quelconque des revendications 1 à 17.

21. Réacteur nucléaire selon la revendication 20, dans lequel le réacteur nucléaire est un réacteur CANDU comprenant des tubes de force, et le cadre est formé et configuré pour s'ajuster à l'intérieur des tubes de force.
